(19) Europäisches Patentamt
European Patent Office
Office européen des brevets

(11) Veröffentlichungsnummer: **0 215 224**
**B1**

(12) # EUROPÄISCHE PATENTSCHRIFT

(45) Veröffentlichungstag der Patentschrift: **06.09.89**

(51) Int. Cl.⁴: **C07F 7/08**

(21) Anmeldenummer: **86109409.2**

(22) Anmeldetag: **10.07.86**

(54) **Verfahren zur Herstellung von epoxidierten Organoalkoxysiliziumverbindungen.**

(30) Priorität: **05.08.85 DE 3528006**

(43) Veröffentlichungstag der Anmeldung: **25.03.87 Patentblatt 87/13**

(45) Bekanntmachung des Hinweises auf die Patenterteilung: **06.09.89 Patentblatt 89/36**

(84) Benannte Vertragsstaaten: **AT CH DE FR GB IT LI NL SE**

(56) Entgegenhaltungen:
**EP-A- 0 090 239**
**DE-C- 1 061 321**

**CHEMICAL ABSTRACTS, Band 81, August 1974, Seite 374, Abstract Nr. 24905x, Columbus, Ohio, US; S. TADASHI et al.: "Regio- and stereoselectivities in the epoxidations of limonen, endo-dicyclopentadiene, and exo-dicyclopentadiene", & BULL. CHEM. SOC. JAP. 1974, 47(5), 1207-1208erial scanned IR imager" 000**

**Die Akte enthält technische Angaben, die nach dem Eingang der Anmeldung eingereicht wurden und die nicht in dieser Patentschrift enthalten sind.**

(73) Patentinhaber: **Degussa Aktiengesellschaft, Weissfrauenstrasse 9, D-6000 Frankfurt am Main 1(DE)**

(72) Erfinder: **Deschler, Ulrich, Dr., Birkenweg 1, D-6450 Hanau 9(DE)**
Erfinder: **Grund, Andreas, Dr., Rilkeweg 15, D-6100 Darmstadt(DE)**
Erfinder: **Prescher, Günter, Dr., Liesingstrasse 2, D-6450 Hanau 9(DE)**

**EP 0 215 224 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist die Herstellung epoxidierter Organoalkoxysiliziumverbindungen durch direkte Oxydation ungesättigter Organoalkoxysiliziumverbindungen.

Siliziumorganische Verbindungen, die mindestens eine Epoxygruppe oder epoxygruppierungstragende Gruppe enthalten, haben seit vielen Jahren technisches Interesse hervorgerufen. So werden sie als Monomer, oder im Verbund mit anderen Monomeren, zur Herstellung hochwertiger Materialien erfolgreich eingesetzt. Ferner finden sie Anwendung als sog. Haftvermittler zwischen verschiedenen Werkstoffen in vielen Bereichen der Polymer- und Klebetechnik.

So sind zur Herstellung der beanspruchten Organosilane mit Epoxygruppen seit langem mehrere Verfahren bekannt. Eine Möglichkeit zur Synthese ist z.B. die katalytische Addition von Silanen mit mindestens einem Wasserstoffatom an die C=C-Doppelbindung eines monoolefinischen Epoxids.

Als Katalysatoren werden Edelmetalle, wie Platin, Rhodium, Ruthenium oder auch Nickel eingesetzt, wobei aber Abtrennung und Rückführung des Katalysators erheblichen technischen Aufwand verursachen (DE-OS 1 937 904, DD-PS 144 413, US-PS 3 745 206).

Eine prinzipiell andere Möglichkeit zur Herstellung der beanspruchten Verbindungsklasse liegt in dem umgekehrten Weg, das heißt, man stellt zunächst ein ungesättigtes Silan her und epoxidiert dieses. Diese sogenannte Direktoxidation läßt sich mit Hilfe organischer Persäuren durchführen (US-PS 3 455 877 bzw. DE-PS 1 061 321). Meist wurde hierzu eine Lösung von Peressigsäure in Essigsäure verwandt, die aber nicht allgemein anwendbar war und je nach Art der ungesättigten Silane nur zu äußerst trägem Reaktionsablauf und zu sehr geringen Ausbeuten führte (E.P. Plueddemann, G. Fanger, J.Am.Chem.Soc., 1959, Band 81, Seite 2632; GB-PS 1 205 819). Außerdem führte bei hydrolysierbaren Silanen, wie Organoalkoxysilanen die Verwendung von wasserhaltigen Persäuren zu drastischen Ausbeutverlusten. Es kam hinzu, daß man bei großtechnischem Einsatz von z.B. Peressigsäure das Sicherheitsrisiko fürchtete (DE-OS 2 159 991).

Die GB-PS 1 205 819 lehrt ein Verfahren zur Epoxidation von ungesättigten Organoalkoxysilanen unter Verwendung von m-Chlorperbenzoesäure in halogenierten Kohlenwasserstoffen als Lösungsmittel bei −10°C bis 150°C. Während mit Persäuren wie Peressigsäure keine befriedigenden Ergebnisse erzielt werden konnten, führte die Epoxidation nach dem in der GB-PS 1 205 819 gelehrten Verfahren zu Ausbeuten um 50 bis 60%. Außer der begrenzten Ausbeute kommt bei dem Verfahren der GB-PS 1 205 819 die erhebliche Korrosionsgefahr durch die Anwendung halogenierter Kohlenwasserstoffe hinzu. Auch bereitete die Abtrennung und Rückführung bzw. Wiederverwertung der bei der Umsetzung gebildeten m-Chlorbenzoesäure Schwierigkeiten; übrigens ein Problem, das auch bei der Verwendung anderer Persäuren und ihrer bei der Umsetzung gebildeten Basissäuren auftrat.

Die EP-A 0 090 239 lehrt ein Verfahren zur Herstellung von 2,2-Dicyclohexenylpropandiepoxid durch Umsetzung von 2,2-Dicyclohexenylpropan mit einer 3 oder 4 C-Atome enthaltenden Percarbonsäure in einem organischen Lösungsmittel bei 0 bis 90°C, wobei die Percarbonsäurelösung eine bestimmte Spezifikation zu erfüllen hat. In diesem Dokument werden ungesättigte Organosiliziumverbindungen als Ausgangsstoffe nicht erwähnt.

Eine direkte Epoxidierung mit 95%igem Wasserstoffperoxid läßt sich ebenfalls aus Sicherheitsgründen nicht durchführen (DE-OS 2 607 768).

Demnach mußte es für den Fachmann den Anschein haben, als ob die Verwendung einer Percarbonsäure bei der Herstellung von epoxidierten Organoalkoxysiliziumverbindungen nicht zweckentsprechend sei.

Aufgabe der Erfindung ist es daher, die Epoxidation ungesättigter Organoalkoxysiliziumverbindungen mit einer Percarbonsäure derartig durchzuführen, daß neben voll befriedigenden Ausbeuten keine Sicherheitsrisiken auftreten und auch die anfallende Basissäure durch technisch einfache Aufarbeitung des Reaktionsgemisches gewonnen und wieder verwendet werden kann.

Gefunden wurde ein Verfahren zur Herstellung von epoxidierten Organoalkoxysiliziumverbindungen durch Epoxidation von Tetraallyloxysilan oder ungesättigten Organoalkoxysiliziumverbindungen mit wenigstens einer Kohlenstoff-Kohlenstoff-Doppelbindung, welche Bestandteil eines Substituenten ist, der über mindestens ein Kohlenstoffatom oder über eine C–O- oder eine C–N-Bindung an das Siliziumatom geknüpft ist, und mindestens einer an das Siliziumatom gebundenen $C_1$–$C_6$-Alkoxygruppe mit einer Percarbonsäure in einem organischen Lösungsmittel bei einer Temperatur von 10 bis 120°C, das dadurch gekennzeichnet ist, daß man Tetraallyloxysilan oder die ungesättigten Organoalkoxysiliziumverbindungen mit Perpropionsäure in benzolischer Lösung im Molverhältnis 1:1 bis 1:2 (zu epoxidierende Doppelbindung zu Perpropionsäure) umsetzt.

Erfindungsgemäß lassen sich z.B. Silane der folgenden Formeln, die zum Teil auch als Isomerengemische vorliegen können, epoxidieren.

1. $Si(O{-}CH_2{-}CH{=}CH_2)_4$

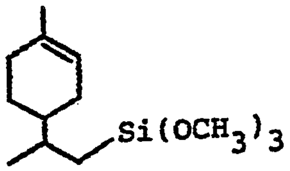

2.

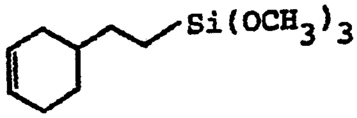

3.

$(CH_3O)_3Si-CH_2-CH_2-CH=CH_2$

4.

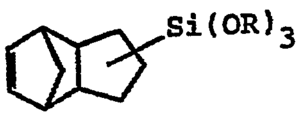

R = Alkyl, Aryl
($C_1$-$C_6$)

5.

Hinweise zur Herstellung der ungesättigten Silane finden sich in folgender Literatur:
E.P. Plueddemann in Kirk Othmer, Vol. 20, Seiten 962 ff.
B.E. Cooper, Process Biochemistry, 1980, Seiten 9 ff.
Charls A. Roth, I and EC Product Research and Development, Vol. 11, 1972, Seite 134.
Erfindungsgemäß lassen sich auch Isomerengemische aus Epoxysilanen der Formeln

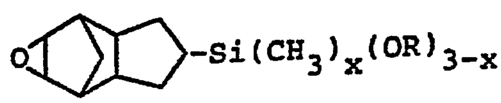

A

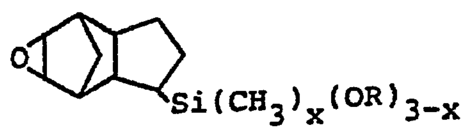

B

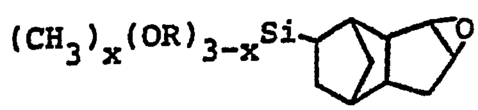

C

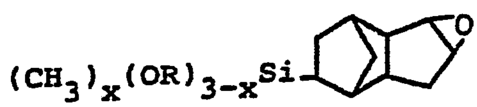

D

in denen X die Werte 1 und 2 und R die Bedeutung $C_1$- bis $C_6$-Alkyl annimmt, herstellen.

Perpropionsäure kann z.B. gemäß dem in der DE-PS 2 519 289 beschriebenen Verfahren hergestellt werden, in dem man wäßriges Wasserstoffperoxid mit Propionsäure in Gegenwart von Schwefelsäure umsetzt und anschließend die entstandene Perpropionsäure mit Benzol aus dem Reaktionsgemische extrahiert. Die auf diese Weise erhaltene Perpropionsäure in benzolischer Lösung kann noch weiter gereinigt werden, um den Restgehalt an Schwefelsäure, Wasser und Wasserstoffperoxid zu verringern, siehe z.B. DE-PS 2 519 290.

Bevorzugt ist aber eine Perpropionsäurelösung, die keiner weiteren Reinigung bedarf, vielmehr läßt sich der Rohextrakt aus der Persäureherstellung ohne Nachteile einsetzen, was zu einem erheblich verringerten technischen Aufwand führt und daher das Verfahren sehr wirtschaftlich gestaltet.

Es kann daher eine Perpropionsäurelösung in Benzol verwendet werden, die bis zu 1,5 Gewichtsprozent Wasserstoffperoxid, 1,5 Gewichtsprozent Wasser und bis zu 800 ppm Mineralsäure enthält. Der Persäuregehalt der Lösungen kann zwischen 10 und 30 Gewichtsprozent, bevorzugt 20 Gewichtsprozent, liegen.

Das erfindungsgemäße Verfahren läßt sich unter verschiedenen Drücken durchführen; im allgemeinen wird unter Normaldruck gearbeitet, das Verfahren läßt sich aber auch bei Über- oder Unterdruck durchführen.

Die Umsetzung kann sowohl diskontinuierlich oder kontinuierlich in für diese Art der Reaktion geeigneten Reaktoren, wie Rührkesseln, Rührkesselkaskaden, Rühr- oder Schlaufenreaktoren, erfolgen, wobei die Reaktionswärme auf beliebige Weise, z.B. Siedekühlung oder innen- bzw. außenliegende Kühleinrichtungen, abgeführt wird.

Geeignete Werkstoffe für die Reaktionsapparate zur Durchführung des erfindungsgemäßen Verfahrens sind z.B. Glas, Edelstahl oder emailliertes Material.

Die Perpropionsäure wird mit dem Olefin auf beliebige Art zusammengebracht. So kann man beide Reaktionsteilnehmer zusammen oder nacheinander in beliebiger Reihenfolge in den Reaktor einbringen. Bei diskontinuierlicher Arbeitsweise wird vorzugsweise das Olefin vorgelegt und die Persäure unter Kontrolle der Reaktionstemperatur zudosiert; es kann aber ebensogut umgekehrt verfahren werden, d.h. man legt die Persäure vor und dosiert das Olefin temperaturkontrolliert zu. Erfolgt die Umsetzung kontinuierlich, so können beide Reaktanten getrennt oder gemeinsam dem Reaktor zugeführt werden. Bei Verwendung mehrerer hintereinandergeschalteter Reaktoren, wie z.B. einer Rührkesselkaskade oder einer Folge von Rührkesseln mit einem Rohrreaktor als Nachreaktor, kann man sowohl Persäure- als auch Silan-Mengen auf mehrere Reaktoren verteilen. Die Silane werden bevorzugt als solche eingesetzt, können aber in gelöster Form, z.B. in Benzol, verwendet werden. Nach dem erfindungsgemäßen Verfahren ist eine kontinuierliche Arbeitsweise besonders vorteilhaft. Danach speist man das ungesättigte Organosilan mit einer Lösung von Perpropionsäure in Benzol im Molverhältnis 1 : 1 bis 1 : 2 (zu epoxidierende Doppelbindung zu Persäure) in ein Reaktionssystem ein, das aus einer Folge von 1 bis 4 ideal durchmischten Reaktoren und einem Nachreaktor besteht, und führt die Reaktion bei einer Temperatur von 10 bis 120 °C durch, wobei man die Verweilzeit so einstellt, daß der Umsatz, bezogen auf eingesetzte olefinische Doppelbindungen, nach dem oder den ideal durchmischten Reaktoren bei mindestens 80 Molprozent und nach dem Nachreaktor bei mindestens 95, bevorzugt über 98 Molprozent, liegt. Das aus dem Nachreaktor austretende Gemisch befreit man in einer Kombination von Destillations- und Desorptionsschritten von Benzol, Propionsäure, geringen Mengen an Perpropionsäure und von anderen Leichtsiedern. Die Auftrennung des Reaktionsgemisches kann nach folgenden Varianten erfolgen:

Variante 1 (diskontinuierlich)

Gemäß dieser werden die einzelnen Bestandteile des Reaktionsgemisches in der Reihenfolge ihrer Siedepunkte einzeln oder als Gemische destillativ oder destillativ und desorptiv entfernt. Hierbei gehen Fraktionen von Benzol, Resten Perpropionsäure, Propionsäure und sonstige leicht flüchtige Bestandteile über. Als Sumpf verbleibt das Epoxid. Das abgetrennte Benzol sowie die Propionsäure können gegebenenfalls nach weiteren Reinigungsschritten in die Persäureherstellung rückgeführt werden.

Variante 2 (kontinuierlich, Abbildungen 1 und 2)

Nach dieser kontinuierlich durchzuführenden Variante werden zunächst, nachdem das Reaktionsgemisch die Reaktionseinheit 1 verlassen hat, Benzol, Propionsäure und nichtumgesetzte Perpropionsäure größtenteils in der ein- oder mehrstufigen Destillationseinheit 2 entfernt. Diese besteht aus geeigneten Apparaten wie Dünnschicht-, Fallfilm- oder Umlaufverdampfern. Es ist vorteilhaft, unter vermindertem Druck von 0,5 bis 600, vorzugsweise 10 bis 300 mbar, zu destillieren (Temperatur des Heizmediums 50 bis 150°C). Die mittleren Verweilzeiten, bezogen auf die einzelnen Stufen der Verdampfung, liegen bei maximal 10 Minuten, bevorzugt werden Verweilzeiten von maximal 5 Minuten. Anschließend wird nach dem erfindungsgemäßen Verfahren die im Rohprodukt verbliebene Menge Propionsäure in der Desorptionseinheit 3 mit Benzoldampf, der im Verdampfer 4 generiert wird, desorptiv entfernt. Die Brüden aus der Desorptionseinheit 3 können entweder an der Destillationseinheit 2 vorbeigeführt oder durch diese hindurchgeführt werden. Nach diesem Schritt werden aus dem Epoxid die verbliebenen Spuren Benzol mit Stickstoff bzw. sonstigen Inertgasen in der Desorptionseinheit 5 desorbiert. Die aus den Destillations- bzw. Desorptionseinheiten 2 und 3 stammenden Kondensatströme, die im wesentlichen aus Benzol, nichtumgesetzter Perpropion- und Propionsäure bestehen, werden nach weiterer Auftrennung, - siehe Abbildung 2, deren Beschreibung später erfolgt - in die Persäureherstellung bzw. Epoxidation rückgeführt.

Als Desorptionseinheit in allen Beispielen eignen sich Apparate wie z.B. Fallfilmverdampfer, Sambay-Verdampfer, Kolonnen mit Einbauten oder Füllkörpern oder ähnliche Vorrichtungen, die einen guten Stoffaustausch zwischen gasförmiger und flüssiger Phase ermöglichen und die dem Fachmann bekannt sind.

Bei allen Varianten fallen Kondensate an, die überwiegend aus Benzol, Propionsäure, geringen Mengen Perpropionsäure sowie ggf. anderen Leichtsiedern bestehen; sie werden nach dem erfindungsgemäßen Verfahren in eine aus einer oder mehreren Kolonnen bestehende Destillationseinheit 6 (Zeichnung 2) überführt. Diese liefert als Kopfprodukt Benzol und gegebenenfalls weitere Leichtsieder. Ersteres wird gegebenenfalls nach weiterer Destillation in 7 in das Herstellungsverfahren der Perpropionsäure

zurückgeführt. Im Sumpf der Destillationseinheit 6 fällt ein Gemisch aus Propionsäure, Perpropionsäure und Benzol mit einem Benzolanteil von 5 bis 35 Gewichtsprozent, bezogen auf die Sumpfgemische, an. Dieses Gemisch wird einer weiteren Destillationseinheit 8 zugeführt, in der man die Gesamtmenge des zugeführten Benzols und der Perpropionsäure mit Anteilen Propionsäure über Kopf abzieht und dabei eine Konzentration von Perpropionsäure im Destillat von 25 Gewichtsprozent nicht überschreitet und dieses Kopfprodukt in das Herstellungsverfahren der Perpropionsäure oder in die Umsetzung des Olefins mit Perpropionsäure zurückführt. Als Sumpfprodukt in Kolonne 8 fällt Propionsäure an, die nach weiterer Aufarbeitung wie Reindestillation in die Herstellung der Perpropionsäure, gegebenenfalls nach Ergänzung, zurückgeführt wird. Besonders vorteilhaft ist es, die in 8 anfallende Propionsäure dampfförmig oberhalb des Sumpfes abzuziehen und zu kondensieren, da hierdurch der weitere Reinigungsschritt entfällt.

Erfindungsgemäß werden alle destillativen Aufarbeitungsschritte vorzugsweise unter vermindertem Druck, z.B. 0,5 bis 600 mbar, durchgeführt. Kolonnen, in denen Benzol oder Propionsäure als Kopfprodukt anfällt, können ebenso bei Normaldruck betrieben werden.

Das erfindungsgemäße Verfahren bietet eine Reihe von überraschenden Vorteilen. Mit Hilfe der sogenannten Prileschajew-Reaktion ist es nach diesem Verfahren möglich, die vorgenannten Epoxisilane im technischen Maßstab auf gefahrlose Weise in hoher Ausbeute herzustellen. Die auf diese Weise erhaltenen Produkte zeichnen sich durch außerordentliche Reinheit, hohen Epoxidgehalt, niedrige Viskosität und helle Farbe aus.

Ebenfalls besonders niedrig, bzw. nicht nachweisbar, ist der Gehalt an ionischen Verunreinigungen, ($Na^+$, $Cl^-$, $Fe^{3+}$, etc.) wodurch ein Produkt mit deutlich besseren Eigenschaften als nach anderen Verfahren hergestellten Epoxisilanen zur Verfügung steht. Gerade für Anwendungen im Bereich der Mikroelektronik werden an die Reinheit der dort einzusetzenden Produkte, Qualitätsanforderungen gestellt, wie sie nach dem erfindungsgemäßen Verfahren besonders leicht erfüllt werden.

Das beschriebene Verfahren ist wirtschaftlich, da alle Hilfsmedien rückgeführt werden. Das Verfahren ist besonders umweltfreundlich, da aus dem Oxidationsmittel lediglich Wasser als Abfall entsteht; darüberhinaus fallen nur geringe Mengen an sonstigen Abwässern, Leichtsiedern und Destillationsrückständen an, die unproblematisch und gefahrlos entsorgt werden können.

Erfindungsgemäß sind nur kurze Reaktionszeiten nötig, was die technische Durchführung besonders wirtschaftlich gestaltet.

Es war überraschend und nicht vorhersehbar, daß die Umsetzung der vorgenannten Silane mit einer rohen Perpropionsäure, die noch Mineralsäure, Wasser und Wasserstoffperoxid in den vorgenannten Konzentrationen enthält, bei weitestgehender Unterdrückung von Neben- und Folgereaktionen durchführbar ist. Weiterhin war nicht vorhersehbar, daß die dabei anfallenden Reaktionsgemische erfindungsgemäß destillativ oder destillativ und desorptiv aufarbeitbar sind, ohne daß sich dadurch der Epoxidgehalt des Produktes merklich verringert.

Beispiel 1 (diskontinuierlich)

Zu 40,0 g (0,23 Mol) 4-Trimethoxysilyl-1-buten wurden unter Rühren bei 75 °C innerhalb 2 Stunden 104 g (0,25 Mol) Perpropionsäure (22 Gewichtsprozent) in Benzol, gegeben. Die Perpropionsäure wurde gemäß DE-PS 25 19 289 hergestellt und wies einen Gehalt von 0,59 Gewichtsprozent Wasserstoffperoxid, 0,91 Gewichtsprozent Wasser und 620 ppm Schwefelsäure auf und wurde auch bei allen folgenden Versuchen verwendet. Nach der Zugabe rührte man 2 Stunden bei 75 °C nach. Der Umsatz an Olefin betrug dann 98 %. Die erhaltene klare, schwach gelbe Lösung wurde innerhalb 20 Minuten bei 90 °C und einem Druck von 100 mbar über einen Dünnschichtverdampfer gegeben, wobei gleichzeitig im Gegenstrom ca 180 g/Stunde Benzoldampf geführt wurden. Das so erhaltene Rohepoxid wurde nun bei 90 °C/30 mbar über den Dünnschichtverdampfer gegeben; im Gegenstrom führte man einen schwachen Stickstoffstrom. Als Sumpf erhielt man 38 g 1,2-Epoxy-4-trimethoxysilylbutan mit einem Epoxygehalt von 88 % (titr.). Weitere Reinigung durch Destillation im Vakuum (Siedepunkt 90 °C/12 mbar).

Elementaranalyse:
Berechnet: C 43,72; H 8,39
Gefunden: C 43,20; H 8,43

Beispiel 2 (diskontinuierlich)

Zu 33,0 g (0,13 Mol) Tetraallyloxysilan wurden unter Rühren bei 70 °C innerhalb 1 Stunde 0,57 Mol Perpropionsäure (22 Gewichtsprozent) in Benzol gegeben. Anschließend rührte man 3 Stunden bei 75 °C nach. Der Olefinumsatz betrug dann 90,2 %. Aufarbeitung wie bei Beispiel 1 führte zu 36,3 g Tetraglycidylsilan als Rohware mit einem Epoxidgehalt von 88,1 % (titr.).

Elementaranalyse:
Berechnet: C 45,00; H 6,29
Gefunden: 44,66; H 6,04

Beispiel 3 (diskontinuierlich)

Zu 80 g (0,35 Mol) 1-Trimethoxysilylethyl-cyclohexen-3 wurden unter Rühren und Kühlen auf 40 °C innerhalb 2 Stunden 0,39 Mol Perpropionsäure (22 Gewichtsprozent) in Benzol gegeben. Der Olefinumsatz betrug nach 2 Stunden Nachreaktion bei 50 °C 94,4 %. Aufarbeitung wie Beispiel 1 lieferte 75 g rohes Trimethoxysilylethyl-epoxy-cyclohexen mit einem Epoxidgehalt von 84 % (GC).
Elementaranalyse:
Berechnet: C 53,63; H 9,00
Gefunden: C 53,29; H 9,04

Beispiel 4 (diskontinuierlich)

Zu 36,2 g (0,14 Mol) Trimethoxysilyl-limonen (Isomerengemisch) wurden unter Rühren und Kühlen auf 40 °C innerhalb 40 Minuten 0,15 Mol Perpropionsäure (22 Gewichtsprozent) in Benzol gegeben. Der Olefinumsatz betrug nach 2,5 Stunden Nachreaktion bei 50 °C 98,6 %. Aufarbeitung wie bei Beispiel 1 ergab als Rohprodukt 33,2 g epoxidiertes Trimethoxysilyl limonen mit einem Epoxidgehalt von 88,3 % (GC).
Elementaranalyse:
Berechnet: C 56,90; H 9,55
Gefunden: C 56,26; H 10,02

Beispiel 5 (kontinuierlich)

In den 1. Rührkessel einer Reaktionseinheit, bestehend aus zwei Rührkesseln vom Volumen 1000 ml und 1200 ml sowie einem als Rohrreaktor ausgebildeten Nachreaktor, der ein Volumen von 790 ml hat, wurden stündlich 1,32 Mol Perpropionsäure in Benzol (22 Gewichtsprozent) und 1,2 Mol Triethoxysilyldicyclopentadien (Isomerengemisch) eingespeist, was einem Molverhältnis Persäure zu Olefin von 1,1 : 1 entspricht. Die Reaktionstemperatur betrug im 1. Reaktor 40 °C, im 2. Reaktor 40 °C und im Nachreaktor 50 °C. Die Umsätze an Olefin betrugen nach der Rührkesselkaskade 92 % und dem Rohrreaktor 96,1 %. Gemäß Aufarbeitungsvariante 2 wurden zunächst in einem Sambay-Verdampfer mit der Fläche von 0,065 $m^2$ bei 90 °C/100 mbar Benzol, Perpropionsäure und Propionsäure abgetrennt. Restliche Propionsäure wurde in einem 2. Verdampfer gleichen Typs und gleicher Fläche bei 90 °C/100 mbar bei einem Durchsatz von 320 g/Stunde Benzoldampf desorbiert, wobei die Brüden aus diesem Verdampfer vollständig im Gegenstrom zum Produkstrom durch den 1. Verdampfer geführt wurden. Nachfolgend wurde das Epoxid in einer Desorptionseinheit, bestehend aus einem Sambay-Verdampfer (Fläche 0,065 $m^2$) bei 95 °C/30 mbar mit 14 g/Stunde Stickstoff behandelt. Als Produkt fielen stündlich 362,1 g epoxidiertes Triethoxysilyldicyclopentadien als Isomerengemisch an.
Elementaranalyse:
Berechnet: C 61,50; H 9,03
Gefunden; C 61,32; H 9,26

Beispiel 6 (kontinuierlich)

In den 1. Rührkessel einer Reaktionseinheit, bestehend aus zwei Rührkesseln vom Volumen von jeweils 1500 ml sowie einem rohrförmigen Nachreaktor vom Volumen von 790 ml wurden stündlich 1,2 Mol Perpropionsäure in Benzol (22 Gewichtsprozent) und 1,1 Mol 1-Triethoxysilylethyl-cyclohexen-3 eingespeist, was einem Molverhältnis von 1,09 : 1 (Persäure zu Olefin) entspricht. Die Reaktionstemperatur betrug im 1. Reaktor 41°C, im 2. Reaktor 40°C und im Nachreaktor 50°C. Die Olefinumsätze lagen nach den Rührkesseln bei 93,4% und nach dem Rohrreaktor bei 96,3%. Wie bei Beispiel 5 erfolgte die Aufarbeitung, wobei jedoch die Brüden des 2. Verdampfers vollständig am 1. Verdampfer vorbeigeführt wurden. Nach der Desorption mit Stickstoff wie bei Beispiel 5 fielen stündlich 306,8 g Epoxid mit einem Gehalt von 91,4% (titr.) an.
Elementaranalyse:
Berechnet: C 58,29; H 9,78
Gefunden: C 57,86; H 9,55

**Patentansprüche**

1. Verfahren zur Herstellung von epoxidierten Organoalkoxysiliziumverbindungen durch Epoxidation von Tetraallyloxysilan oder ungesättigten Organoalkoxysiliziumverbindungen mit wenigstens einer Kohlenstoff-Kohlenstoff-Doppelbindung, welche Bestandteil eines Substituenten ist, der über mindestens ein Kohlenstoffatom oder über eine C–O- oder eine C–N-Bindung an das Siliziumatom geknüpft ist und mindestens einer an das Siliziumatom gebundenen $C_1$–$C_6$-Alkoxygruppe mit einer Percarbonsäure in einem organischen Lösungsmittel bei einer Temperatur von 10 bis 120°C, dadurch gekennzeichnet, daß man Tetraallyloxysilan oder die ungesättigten Organoalkoxysiliziumverbindungen mit Perpropionsäure in

benzolischer Lösung im Molverhältnis 1 : 1 bis 1 : 2 (zu epoxidierende Doppelbindung zu Perpropionsäure) umsetzt.

2. Verfahren nach Anspruch 1, dadurch gekennzeichnet, daß man eine Perpropionsäurelösung in Benzol einsetzt, die maximal einen Gehalt von 1,5 Gew.-% Wasserstoffperoxid, 1,5 Gew.-% Wasser und bis zu 800 ppm Mineralsäure besitzt.

3. Kontinuierliches Verfahren nach den Ansprüchen 1 oder 2, dadurch gekennzeichnet, daß man Tetrallylsilan oder die ungesättigte Organoalkoxysiliziumverbindung mit einer Lösung von Perpropionsäure in Benzol im Molverhältnis 1 : 1 bis 1 : 2 (zu epoxidierende Doppelbindung zu Persäure) in ein Reaktionssystem einspeist, das aus einer Folge von 1 bis 4 ideal durchmischten Reaktoren und einem Nachreaktor besteht, die Reaktion bei einer Temperatur von 10 bis 120°C, vorzugsweise 40 bis 70°C durchführt, wobei man die Verweilzeit so einstellt, daß der Umsatz, bezogen auf eingesetzte olefinische Doppelbindungen, nach dem oder den ideal durchmischten Reaktoren bei mindestens 80 Molprozent und nach dem Nachreaktor bei mindestens 95, bevorzugt über 98 Molprozent, liegt, und daß man das aus dem Nachreaktor austretende Gemisch in einer Kombination von Destillations- und Desorptionsschritten von Benzol, Perpropionsäure, geringen Mengen an Perpropionsäure und von anderen Leichtsiedern befreit.

4. Verfahren nach einem oder mehreren der Ansprüche 1 bis 3, dadurch gekennzeichnet, daß man die Destillations- und Desorptionsschritte unter vermindertem Druck von 10 bis 300 mbar bei Temperaturen des Heizmediums von 50 bis 150°C und bei Verweilzeiten von maximal 10 Minuten, bevorzugt maximal 5 Minuten, in den einzelnen Schritten, durchführt.

5. Verfahren nach einem oder mehreren der Ansprüche 1 bis 4, dadurch gekennzeichnet, daß man zunächst Benzol und Propionsäure sowie die geringen Mengen Perpropionnsäure größtenteils destillativ abtrennt, worauf man die verbliebene Menge Proprionsäure im Rohepoxid mit Benzoldampf weiter desorptiv entfernt und hieran direkt anschließend das Benzol und Spuren von Propionsäure desorptiv mit Inertgasen austreibt.

6. Verfahren nach einem oder mehreren der Ansprüche 1 bis 5, dadurch gekennzeichnet, daß man das bei der Kombination von Destillations- und Desorptionsschritten anfallende Kondensat aus Benzol, Propionsäure, geringen Mengen Perpropionsäure, sowie gegebenenfalls anderen Leichtsiedern in eine aus zwei oder mehreren Destillationskolonnen bestehende Destillationsanlage führt und in dem ersten Destillationsschritt über Kopf Benzol, gegebenenfalls im Gemisch mit anderen Leichtsiedern, abzieht, das man gegebenenfalls nach destillativer Reinigung in das Herstellungsverfahren der Perpropionsäure wieder zurückführt, und daß man das im Sumpf anfallende Gemisch aus Perpropionsäure, Propionsäure und Benzol mit einem Benzolanteil von 5 bis 35 Gew.-%, bezogen auf die Sumpfmischung, entnimmt und diese Mischung in eine zweite Destillationsstufe führt, in der man die Gesamtmenge des darin enthaltenen Benzols und der Perpropionsäure mit Anteilen an Propionsäure über Kopf abzieht und dabei eine Konzentration von Perpropionsäure in dem Kopfprodukt von mehr als 25 Gew.-% nicht überschreitet, dieses Kopfprodukt in das Herstellungsverfahren der Perpropionsäure oder in die Umsetzung der Perpropionsäure mit Olefin zurückführt, und daß man die Propionsäure als Sumpfprodukt gegebenenfalls dampfförmig, oberhalb des Sumpfes abzieht und in das Herstellungsverfahren der Perpropionsäure zurückführt.

7. Verfahren nach einem oder mehreren der Ansprüche bis 6, dadurch gekennzeichnet, daß man als ungesättigte Organoalkoxysiliziumverbindungen Isomerengemische der Formel

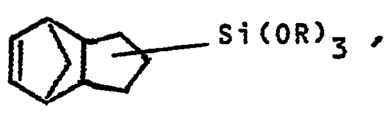

worin R $C_1$- bis $C_6$-Alkyl bedeutet, epoxidiert.

**Claims**

1. A process for the production of epoxidized organoalkoxysilicon compounds by epoxidation of tetraallyloxysilane or unsaturated organoalkoxysilicon compounds containing at least one carbon-carbon double bond, which is part of a substituent attached to the silicon atom by at least one carbon atom or by a C–O- or C–N-bond, and at least one $C_{1-6}$ alkoxy group attached to the silicon atom with a percarboxylic acid in an organic solvent at a temperature in the range from 10 to 120°C, characterized in that the tetraallyloxysilane or the unsaturated organoalkoxysilicon compounds are reacted with perpropionic acid in benzene solution in a molar ratio of 1 : 1 to 1 : 2 (double bond to be epoxidized to perpropionic acid).

2. A process as claimed in claim 1, characterized in that a solution of perpropionic acid in benzene containing at most 1.5% by weight hydrogen peroxide, 1.5% by weight water and up to 800 ppm mineral acid is used.

3. A continuous process as claimed in claim 1 or 2, characterized in that the tetraallylsiloxane or the unsaturated organoalkoxysilicon compound is fed with a solution of perpropionic acid in benzene in a molar ratio of 1 : 1 to 1 : 2 (double bond to be epoxidized to per acid) into a reaction system consisting of a sequence of 1 to 4 ideally mixed reactors and an after-reactor, the reaction is carried out at a temperature of 10 to 120°C and preferably at a temperature of 40 to 70°C, the residence time being regulated in such

a way that the conversion, based on olefinic double bonds used, amounts to at least 80 mol-% after the ideally mixed reactor(s) and to at least 95 and preferably to more than 98 mol-% after the after-reactor and in that the mixture issuing from the after-reactor is freed from benzene, propionic acid, small quantities of perpropionic acid and other low-boiling constituents in a combination of distillation and desorption steps.

4. A process as claimed in one or more of claims 1 to 3, characterized in that the distillation and desorption steps are carried out under a reduced pressure of 10 to 300 mbar at temperatures of the heating medium of 50 to 150°C and with residence times in the individual steps of at most 10 minutes and preferably of at most 5 minutes.

5. A process as claimed in one or more of claims 1 to 4, characterized in that benzene and propionic acid and the small quantities of perpropionic acid are first largely separated off by distillation, after which the residual quantity of propionic acid in the crude epoxide is removed by desorption with benzene vapor and the benzene and traces of propionic acid are removed immediately afterwards by desorption with inert gases.

6. A process as claimed in one or more of claims 1 to 5, characterized in that the condensate of benzene, propionic acid, small quantities of perpropionic acid and, optionally, other low-boiling constituents which is formed during the combined distillation and desorption steps is transferred to a distillation unit consisting of two or more distillation columns and, in the first distillation step, benzene – optionally in admixture with other low-boiling constituents – is distilled off overhead and, optionally after purification by distillation, is returned to the production of perpropionic acid and in that the mixture of perpropionic acid, propionic acid and benzene, which accumulates in the sump with a benzene content of 5 to 35% by weight, based on the sump mixture, is removed and transferred to a second distillation stage where the total quantity of benzene present and the perpropionic acid containing proportions of propionic acid is distilled off overhead, the concentration of perpropionic acid in the head product not exceeding more than 25% by weight, this head product is returned to the production of perpropionic acid or to the reaction of perpropionic acid with olefin and in that the propionic acid is removed as the sump product, optionally in vapor form, above the sump and returned to the production of the perpropionic acid.

7. A process as claimed in one or more of claims 1 to 6, characterized in that isomer mixtures corresponding to the following formula

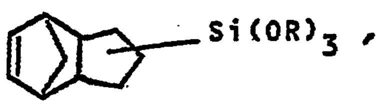

in which R is $C_{1-6}$ alkyl, are epoxidized as the unsaturated organoalkoxysilicon compound.

**Revendications**

1. Procédé de préparation des composés organoalcoxysilicium par époxydation de tétraallyloxysilane ou de composés organoalcoxysilicium insaturés avec au moins une double liaison carbone-carbone, qui fait partie d'un substituant qui est relié au silicium par l'intermédiaire d'au moins un atome de carbone ou d'une liaison C–O- ou C–N- à l'atome de silicium, et avec au moins un groupe alcoxy $C_1$–$C_6$ lié à l'atome de silicium, avec un acide percarboxylique dans un solvant organique, à une température comprise entre 10 et 120°C, caractérisé en ce qu'on fait réagir le tétraallyloxysilane ou les composés organoalcoxysilicium insaturés avec de l'acide perpropionique en solution benzénique dans un rapport molaire de 1 : 1 à 1 : 2 (de la double liaison à époxyde à l'acide perpropionique).

2. Procédé selon la revendication 1, caractérisé en ce qu'on utilise une solution d'acide perpropionique dans le benzène, qui possède au maximum une teneur de 1, 5% en poids de peroxyde d'hydrogène, 1,5% en poids d'eau et jusqu'à 800 ppm d'acide minéral.

3. Procédé en continu selon les revendications 1 ou 2, caractérisé en ce qu'on introduit du tétraalllylsilane ou le composé insaturé d'organoalcoxysilicium avec une solution d'acide perpropionique dans le benzène en proportion molaire (1 : 1 à 1 : 2) (de la double liaison à époxyder au peracide) dans un système de réaction, qui est constitué d'une succession de 1 à 4 réacteurs parfaitement agités et d'un réacteur final, on réalise la réaction à une température de 10 à 120°C, de préférence 40 à 70°C, en réglant le temps de séjour de telle façon que le rendement rapporté aux doubles liaisons oléfiniques, est d'au moins 80 pourcents après les réacteurs parfaitement agités et d'au moins 95 pourcents après le réacteur final, de préférence au-dessus de 98 pourcents et qu'on épure le mélange sortant du réacteur final par une combinaison d'étapes de distillation et de désorption par élimination du benzène, de l'acide propionique, de faibles traces d'acide perpropionique et d'autres produits volatils.

4. Procédé selon l'une ou plusieurs des revendications 1 à 3, caractérisé en ce qu'on réalise les étapes de distillation et de désorption sous pression réduite, de 10 à 300 mbar à des températures du milieu de chauffage de 50 à 150°C et pour des temps de séjour d'au maximum 10 minutes, de prérérence au maximum de 5 minutes, dans chaque étape.

5. Procédé selon l'une ou plusieurs des revendications 1 à 4, caractérisé en ce qu'on sépare d'abord le benzène et l'acide propionique, ainsi que les faibles traces d'acide perpropionique par distillation pour la plus grande partie, après quoi, la quantité restante d'acide propionique dans l'époxyde brut est éliminée par désorption avec de la vapeur de benzène, puis tout de suite après, le benzène et les traces d'acide propionique sont éliminées par désorption avec des gaz inertes.

6. Procédé selon une ou plusieurs des revendications 1 à 5, caractérisé en ce que grâce à une combinaison d'étapes de distillation et de désorption, on dirige le condensat obtenu de benzène, acide propionique, de traces d'acide perpropionique, ainsi que le cas échéant d'autres produits volatils dans une unité de distillation constituée de une ou plusieurs colonnes de distillation, et dans la première étape de distillation, on recueille en tête le benzène, les cas échéant en mélange avec d'autres produits volatils, que, le cas échéant après purification par distillation on recycle dans le processus de fabrication de l'acide perpropionique et qu'en pied de colonne on prélève le mélange constitué d'acide perpropionique, d'acide propionique et de benzène, avec une teneur en benzène de 5 à 35% par rapport au mélange de pied de colonne, et le conduit dans un deuxième étage de distillation, dans lequel on recueille en tête la totalité du benzène qui y est contenu, ainsi que l'acide perpropionique avec des traces d'acide propionique et ce faisant on ne dépasse pas une concentration d'acide perpropionique dans le produit de tête, de 25% en poids, on recycle ce produit de tête dans le procédé de production de l'acide perpropionique ou dans la réaction de l'acide perpropionique avec l'oléfine, et qu'on prélève l'acide propionique sous forme de produit de pied de colonne, le cas échéant sous forme vapeur, au-dessus du pied de colonne et on le recycle dans le processus de fabrication de l'acide perpropionique.

7. Procédé selon une ou plusieurs des revendications 1 à 6, caractérisé en ce qu'on époxyde le mélange d'isomère de composé organoalcoxysilicium insaturé de formule:

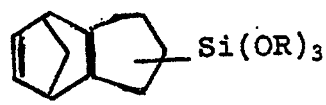

dans laquelle R est un alkyle de $C_1$ à $C_6$.